# DEMANDE DE BREVET EUROPEEN

(11) **EP 1 262 743 A1**
(43) Date de publication de la demande: **04.12.2002**
(21) Numéro de dépôt: 02362010.7
(22) Date de dépôt: 29.05.2002
(51) Int. Cl.: G01F 15/18, E03B 7/07

(54) **Dispositif de raccordement pour poste de comptage d'eau**

(30) Priorité: 30.05.2001 FR 0107069
(71) Demandeur: PERSOHN S.A., F-33430 Bazas (FR)
(72) Inventeur: Persohn, Philippe, 33430 Sauviac (FR); Persohn, Jean-Pierre, 33730 Pompejac (FR)
(74) Mandataire: Thébault, Jean-Louis

(57) **Abrégé**

L'objet de l'invention est un dispositif de raccordement susceptible d'être intégré dans un poste de comptage d'eau caractérisé en ce qu'il comprend un compteur (12) de type horizontal avec des moyens de raccordement (14) disposés de chaque côté du compteur, de préférence au droit l'un de l'autre, un corps (16) comportant deux conduits (18), chacun ayant à une première extrémité des moyens de liaison aux conduits (22) du réseau, deux raccords (26, 28) dont une première extrémité est susceptible de venir au droit de la seconde extrémité du conduit (18) correspondant du corps et dont une seconde extrémité comporte des moyens (32) de liaison au raccordement (14) correspondant du compteur (12), et au moins un collier de bridage (34) disposé au niveau de la jonction du corps (16) et des raccords (26, 28), ledit collier de bridage (34) d'une part, et lesdits raccords (26, 28) et ledit corps (16) d'autre part, ayant des formes conjuguées permettant audit collier (34) de maintenir en contact lesdits raccords et ledit corps.

## Description

La présente invention se rapporte à un dispositif de raccordement pour poste de comptage d'eau, plus particulièrement destiné au compteur de type horizontal, ainsi qu'à un poste de comptage d'eau équipé dudit dispositif.

Le brevet EP-759.133 décrit plus particulièrement un ensemble de vanne-clapet d'isolement appliqué à un poste de comptage d'eau utilisant un compteur de type coaxial. Ce poste se présente sous la forme d'une borne, réalisée par l'assemblage de deux demi-coques en matière plastique, dans laquelle sont disposés le compteur, l'ensemble de raccords et de clapets, le tout étant intégré dans un bloc de matière isolante de type polystyrène expansé. En fonction des régions, ce poste de comptage peut comprendre un caloduc pour limiter les risques de gel.

Selon ce document, le poste de comptage comporte un ensemble vanne-clapet d'isolement comportant un siège annulaire et un organe d'obturation en matériau magnétique sous forme d'une bille, susceptible d'occuper deux positions, une première dite de repos sous l'effet de la pesanteur, dans laquelle la bille ne peut être entraînée par le flux circulant dans la vanne, et une seconde position dans laquelle la bille peut être entraînée par le flux de manière à être plaquée contre le siège afin d'empêcher l'écoulement du fluide, le soulèvement de la bille étant initié grâce à un champ magnétique.

Ce type de poste est plus particulièrement apprécié pour son ergonomie, sa grande simplicité d'utilisation et sa fiabilité, sans aucune vanne enterrée à proximité de la canalisation publique susceptible de se gripper.

Toutefois, ces postes de comptage d'eau n'utilisent que des compteurs de type coaxial, c'est-à-dire avec des raccordements au réseau parallèles, disposés l'un contre l'autre, d'un même côté du compteur.

Les compteurs de type horizontal, c'est-à-dire avec des raccordements au réseau disposés de chaque côté du compteur, de préférence disposés au droit l'un de l'autre, sont le plus souvent disposés dans des regards ou dans des coffres. En raison de la disposition des raccordements, ces compteurs ne peuvent pas être intégrés dans des bornes compactes, du même type que celles destinées aux compteurs de type coaxial, facilitant l'isolation thermique.

Aussi, la présente invention vise à proposer plus particulièrement un dispositif de raccordement simple, rapide, fiable et sûr, ce dernier étant intégré dans un poste de comptage d'eau comportant un compteur de type horizontal, compact, ergonomique et susceptible d'être parfaitement isolé thermiquement.

A cet effet, l'invention a pour objet un dispositif de raccordement susceptible d'être intégré dans un poste de comptage d'eau caractérisé en ce qu'il comprend :
- un compteur de type horizontal avec des moyens de raccordement disposés de chaque côté du compteur, de préférence au droit l'un de l'autre,
- un corps comportant deux conduits, chacun ayant à une première extrémité des moyens de liaison aux conduits du réseau,
- deux raccords dont une première extrémité est susceptible de venir au droit de la seconde extrémité du conduit correspondant du corps et dont une seconde extrémité comporte des moyens de liaison au raccordement correspondant du compteur, et
- au moins un collier de bridage disposé au niveau de la jonction du corps et des raccords, ledit collier de bridage d'une part, et lesdits raccords et ledit corps d'autre part, ayant des formes conjuguées permettant audit collier de maintenir en contact lesdits raccords et ledit corps.

Selon l'invention, on obtient un dispositif de raccordement en deux parties, une première partie fixe, reliée au réseau, comprenant le corps, et une seconde partie amovible comprenant les raccords et le compteur, le collier de bridage assurant une liaison solide entre les parties fixe et amovible, tout en autorisant un démontage rapide.

Selon un mode de réalisation préféré, le corps comprend une surface sensiblement plane, au niveau de laquelle débouchent les secondes extrémités des deux conduits, chacune sous forme d'un alésage d'axe sensiblement perpendiculaire à ladite surface, et à la périphérie de laquelle est ménagée une collerette, et les raccords comprennent chacun au niveau de leur première extrémité une portée cylindrique de diamètre légèrement inférieur à l'alésage du conduit du corps, délimitée par une collerette susceptible de prendre appui contre la surface du corps, le collier de bridage, entourant les deux conduits, comprenant des rebords susceptibles d'être disposés de part et d'autre desdites collerettes de manière à assurer une liaison solide entre les raccords et le corps.

Avantageusement, le collier de bridage est en matériau approprié pour être utilisé comme moyen de plombage.

Selon une autre caractéristique, chaque raccord comporte au niveau de sa seconde extrémité une tête de raccordement susceptible d'être raccordée directement ou non au raccordement correspondant du compteur, comprenant un alésage en forme de tonneau, dont l'axe longitudinal est sensiblement parallèle à l'axe du raccordement du compteur, au niveau de la paroi périphérique duquel débouche un conduit comportant une section évolutive, sensiblement circulaire au niveau de la première extrémité dudit raccord et de forme aplatie au niveau de la jonction avec la tête.

Ce type de profil permet d'obtenir un dispositif de raccordement relativement compact, tout en limitant les pertes de charge au niveau de l'écoulement du fluide.

Selon une autre caractéristique, des moyens de liaison de type rotule sont prévus entre les raccordements du compteur et les raccords, constitués d'un élément susceptible d'être relié de manière rigide au raccordement correspondant, présentant une portée de préférence conique susceptible d'être introduite dans un alésage ménagé dans la tête de raccordement, coaxial à l'alésage en tonneau.

Cet agencement permet de compenser les éventuelles variations dimensionnelles des positions relatives des raccordements du compteur.

Dans ce cas, pour assurer un positionnement correct des portées cylindriques des raccords l'une par rapport à l'autre, afin de rendre plus aisée leur introduction simultanée dans les alésages des conduits du corps, un pion de positionnement est prévu pour relier les premières extrémités des raccords.

La présente invention a également pour objet un poste de comptage d'eau comprenant un dispositif de raccordement selon l'invention, intégré dans un bloc de matière isolante de type polystyrène expansé, le tout étant disposé dans une borne formée d'une coque en matière plastique.

D'autres caractéristiques et avantages ressortiront de la description qui va suivre du dispositif selon l'invention, description donnée à titre d'exemple uniquement et en regard des dessins annexés sur lesquels :
- la figure 1 est une vue en perspective du dispositif de raccordement selon l'invention,
- la figure 2 est une vue en coupe illustrant en détail le dispositif de raccordement,
- la figure 3A est une vue en perspective du corps,
- la figure 3B est une vue en coupe longitudinale du corps,
- la figure 4 est une vue en élévation latérale du clapet à bille susceptible d'équiper le corps,
- la figure 5 est une vue en élévation d'un premier exemple de raccord, appelé raccord droit,
- la figure 6 est une vue en élévation d'un second exemple de raccord, appelé raccord gauche,
- la figure 7 est une vue de détail illustrant la liaison entre les raccords droit ou gauche et le compteur de type horizontal.

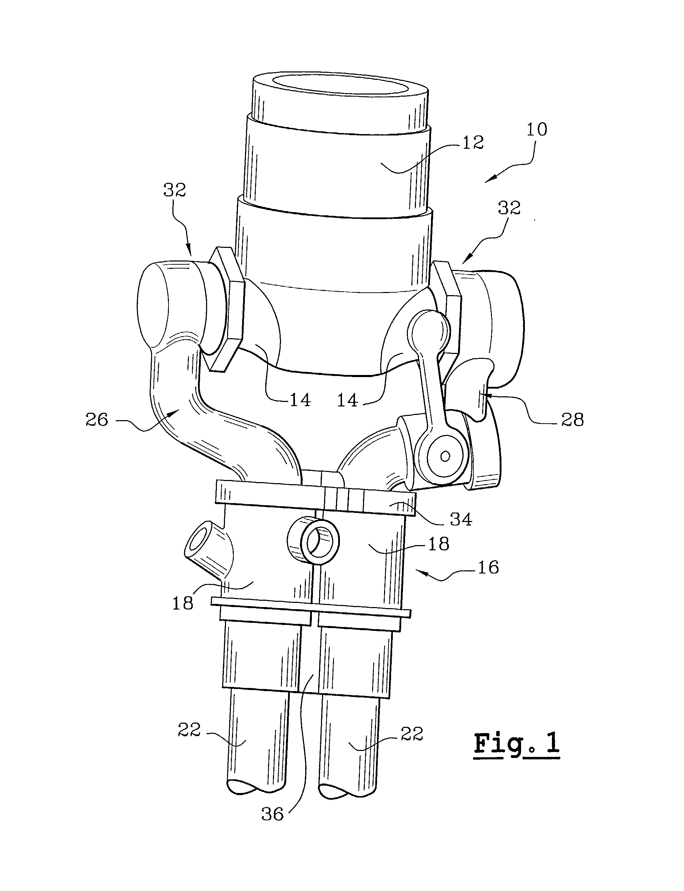

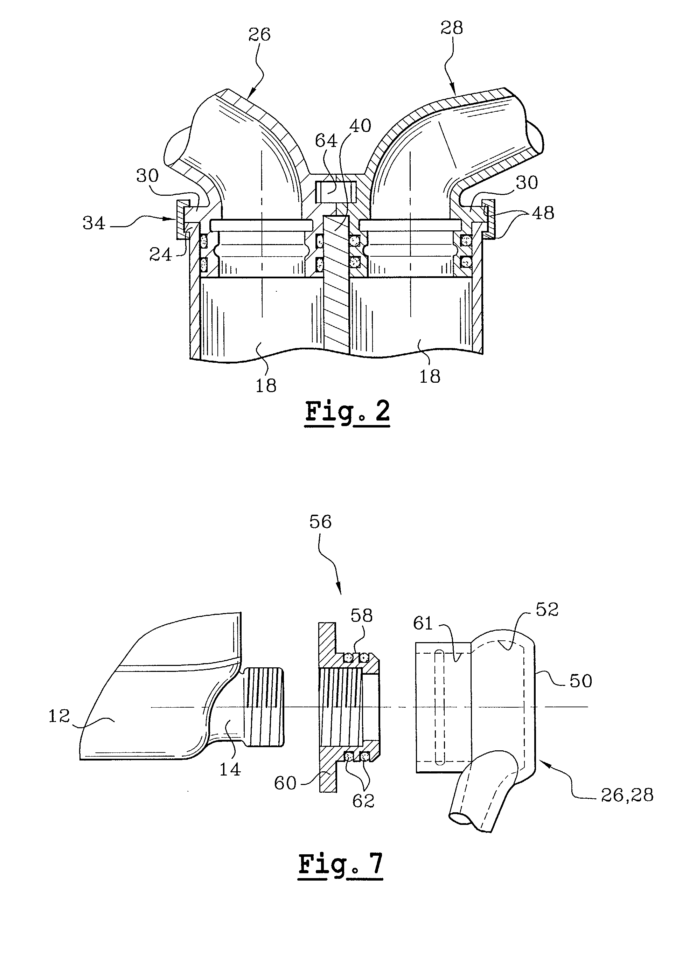

Sur les figures 1 et 2, on a représenté un dispositif de raccordement 10, d'un poste de comptage d'eau, de préférence intégré dans un bloc de matière isolante de type polystyrène expansé, le tout étant disposé dans une borne formée d'une coque en matière plastique, avantageusement identique aux bornes des postes de comptage à compteur de type coaxial.

Selon l'invention, le dispositif de raccordement 10 est constitué
- d'un compteur 12 de type horizontal avec des moyens de raccordement 14 (entrée et sortie) disposés de chaque côté du compteur, de préférence au droit l'un de l'autre et sous forme d'embout fileté,
- d'un corps 16 comportant deux conduits 18, chacun ayant à une première extrémité des moyens 20 de liaison aux conduits 22 du réseau, et à une seconde extrémité une collerette 24 entourant les deux conduits,
- de deux raccords 26, 28, dont une première extrémité, susceptible de venir au droit de la seconde extrémité du conduit 18 du corps correspondant, comprend une collerette 30 susceptible d'être plaquée contre la collerette 24 du corps et dont une seconde extrémité comprend des moyens 32 de liaison aux embouts filetés 14 correspondant du compteur 12, et
- un collier de bridage 34 susceptible de maintenir les collerettes 24 et 30 du corps et des raccords plaquées les unes contre les autres.

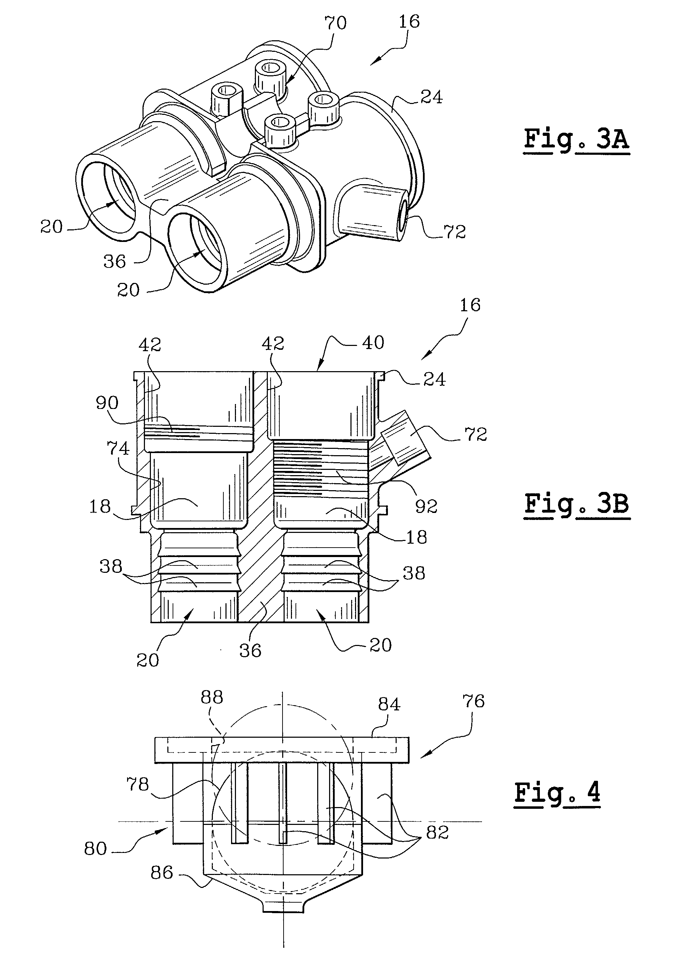

Comme illustré par les figures 3A et 3B, le corps est obtenu par moulage, et comporte les deux conduits 18 à section évolutive, reliés par une toile 36.

Selon un mode de réalisation préféré, les moyens 20 de liaison sont obtenus par sertissage, en réalisant un ou plusieurs crans 38 au niveau de l'alésage des premières extrémités, qui par déformation enserrent le conduit 22 du réseau, de préférence en matière plastique.

Le corps 16 comprend au niveau des secondes extrémités une surface 40 sensiblement plane au niveau de laquelle débouchent les deux conduits 18, dont les axes sont sensiblement perpendiculaires à ladite surface 40.

La collerette 24 est disposée de préférence à la périphérie de la surface 40 qui peut avoir une forme oblongue ou la forme de deux disques juxtaposés.

Chaque conduit 18 comporte au niveau de sa seconde extrémité un alésage 42 susceptible de recevoir la première extrémité du raccord 26 ou 28 correspondant.

En complément, les raccords 26 et 28 comprennent au niveau de leur première extrémité une portée cylindrique 44 de diamètre légèrement inférieur à l'alésage 42, délimitée par la collerette 30, cette dernière étant susceptible de prendre appui contre la surface 40.

Avantageusement, la portée cylindrique 44 comporte des moyens 46 d'étanchéité appropriés, par exemple des joints toriques disposés dans des gorges.

Comme illustré par la figure 2, le collier de bridage 34 est disposé au droit des collerettes 24 et 30 et comprend des rebords 48 susceptibles d'être disposés de part et d'autre desdites collerettes de manière à assurer une liaison solide entre les raccords et le corps.

Selon l'invention, on obtient un dispositif de raccordement en deux parties, une première partie fixe, reliée au réseau, comprenant le corps 16, et une seconde partie amovible comprenant les raccords 26, 28 et le compteur 12, le collier de bridage 34 assurant une liaison solide entre les parties fixe et amovible, tout en autorisant un démontage rapide.

De façon avantageuse, le collier de bridage 34 est en matériau approprié pour être utilisé comme moyen de plombage, susceptible d'être sectionné aisément en cas d'intervention par une personne habilitée, et permettant de contrôler rapidement que le dispositif de raccordement n'a pas été démonté par des personnes non habilitées.

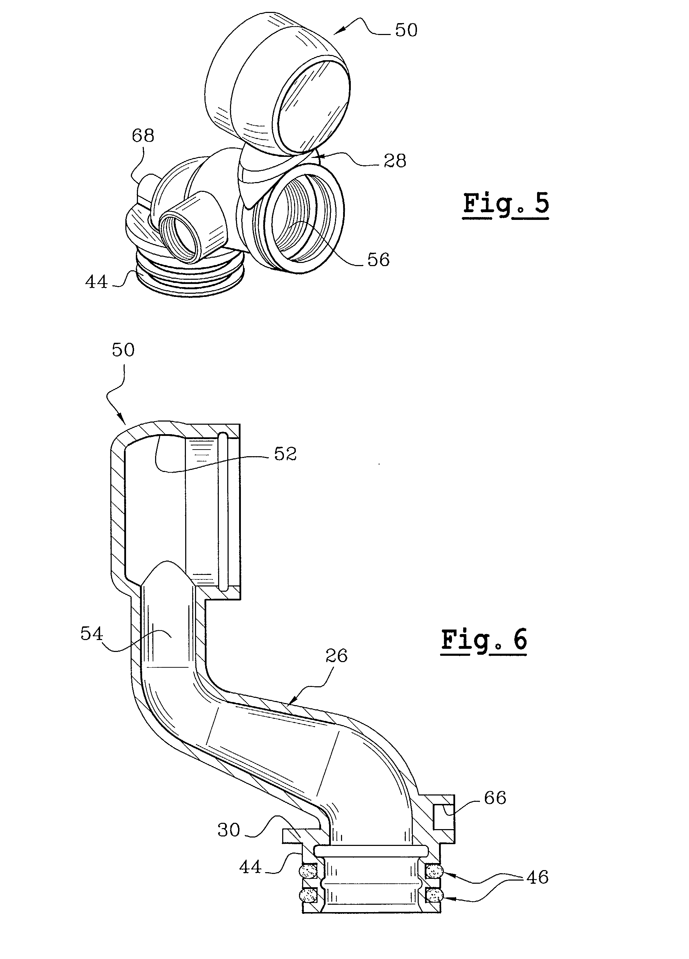

Selon un mode de réalisation préféré et illustré par les figures 5 et 6, chaque raccord 26 et 28 comporte au niveau de sa seconde extrémité une tête de raccordement 50 susceptible d'être reliée directement ou non à l'embout fileté 14 correspondant du compteur 12.

Cette tête de raccordement 50 comprend un alésage 52 en forme de tonneau dont l'axe longitudinal est sensiblement parallèle à l'axe de l'embout fileté 14 du compteur, au niveau de la paroi périphérique duquel débouche un conduit 54 dont la section intérieure a une forme évolutive, cette dernière étant sensiblement circulaire au niveau de la première extrémité et de forme aplatie au niveau de la jonction avec la tête 50.

Ce type de profil permet d'obtenir un dispositif de raccordement relativement compact, tout en limitant les pertes de charge au niveau de l'écoulement du fluide.

De manière avantageuse, comme illustré par la figure 5, le raccord 28 situé en aval du compteur 12 peut comprendre dans un logement 56 une vanne visible sur la figure 1.

Selon une autre caractéristique de l'invention, illustrée par la figure 7, des moyens 58 de liaison de type rotule sont prévus entre les raccordements 14 du compteur 12 et les raccords 26 et 28, constitués d'un élément 60 susceptible d'être relié de manière rigide au raccordement 14 correspondant, selon le mode de réalisation illustré, vissé sur l'embout filetée 14, avec une portée 58 de préférence conique susceptible d'être introduite dans un alésage 61 ménagé dans la tête de raccordement 50, coaxial à l'alésage 52.

Pour assurer une liaison plus solide entre l'élément 60 et la tête de raccordement 50, la portée 58 comprend une rainure, non représentée, dans laquelle est susceptible de se loger un élément en saillie solidaire de la tête 50 par exemple une vis.

De préférence, des moyens d'étanchéité 62, par exemple sous forme de joints toriques disposés dans des gorges, sont prévus au niveau de la portée 58.

Grâce à ces moyens 58 de liaison de type rotule, les portées cylindriques 44 sont toujours parfaitement disposées dans les alésages 42 si bien que les moyens 46 d'étanchéité ne subissent aucune contrainte et assurent une parfaite étanchéité, même en cas de dispersions dimensionnelles relativement importantes au niveau des positions relatives des raccordements 14 du compteur.

Dans ce cas, pour procurer à la seconde partie démontable du dispositif de raccordement une meilleure rigidité, un pion de positionnement 64 est prévu pour relier les premières extrémités des raccords 26 et 28 de manière à positionner correctement les portées cylindriques 44 l'une par rapport à l'autre, afin de rendre plus aisée leur introduction simultanée dans les alésages 42 respectifs.

A cet effet, le pion 64 est ajusté parfaitement dans un alésage 66 ménagé au niveau de la paroi du raccord 26 orientée vers l'autre raccord 28, à proximité de la collerette 30 et introduit avec un faible jeu dans un alésage 68 ménagé au niveau de la paroi de l'autre raccord 28, à proximité de la collerette 30, comme illustré plus en détail par la figure 2.

Selon d'autres caractéristiques de l'invention, le corps 16 comprend également sur l'une de ses faces des moyens 70 de raccordement d'un caloduc sous forme d'une empreinte et de bossages, visibles sur la figure 3B.

Avantageusement, les conduits 18 peuvent comporter un ou plusieurs ajutages 72, utilisés pour effectuer un prélèvement ou pour injecter un fluide par exemple.

De plus, le conduit 18.1 d'arrivée d'eau peut comprendre au niveau de son alésage une chambre 74 dans laquelle peut être disposé un ensemble vanne-clapet 76 comportant une bille 78 en matériau magnétique, comme illustré par la figure 4.

Cet ensemble 76 comprend une cage 80 emprisonnant la bille magnétique 78, de forme sensiblement cylindrique, constituée de barreaux 82 dont les extrémités sont fixées d'un côté à un siège annulaire 84, et d'autre part à un casque hémisphérique 86. Les barreaux 82 sont espacés de manière à permettre l'écoulement du fluide.

Le siège 84 présente un orifice 88 inférieur au diamètre de la bille 78.

La cage 80 est disposée coaxialement au conduit 18.1, disposé sensiblement verticalement, le casque 86 étant disposé en amont c'est-à-dire en bas.

Selon le principe de fonctionnement de cet ensemble, la bille 78 est susceptible d'occuper deux positions extrêmes, la première en utilisation normale, dans laquelle elle repose par gravité dans le casque hémisphérique 86 qui l'abrite du flux montant, et une seconde position correspondant à la position fermée du clapet, dans laquelle la bille 78 est plaquée sous l'effet de la pression du flux montant contre le siège annulaire 84 et obstrue l'orifice 88.

Pour initier le mouvement vers le haut de la bille 78 en direction du siège annulaire 84, on génère un champ magnétique, à l'aide d'un aimant par exemple. La pression du flux montant permet une fois que la bille 78 est sortie du casque 78 de la maintenir plaquée contre le siège 84.

Pour revenir en position passante, il suffit de rétablir au dessus de la bille 78 une pression supérieure à la pression du flux montant moins le poids de la bille.

Un écrou, non représenté, peut se visser dans une zone filetée 90 de l'alésage du conduit 18.1 de manière à maintenir l'ensemble vanne-clapet 76 dans la chambre 74. Cet agencement permet de pouvoir introduire ou retirer aisément l'ensemble vanne/clapet 76 par l'ouverture supérieure du conduit 18.1 sans avoir à démonter le corps 16.

Selon une autre caractéristique, le conduit 18.2 de sortie d'eau peut comporter au moins une zone filetée 92, susceptible de recevoir par vissage un raccord d'un conduit annexe, pour une alimentation momentanée.

Bien entendu, l'invention n'est évidemment pas limitée au mode de réalisation représenté et décrit ci-dessus, mais en couvre au contraire toutes les variantes, notamment en ce qui concerne les formes et dimensions des raccords 26, 28, les matériaux utilisés ainsi que les modes d'obtention des différents éléments.

Par ailleurs, en variante, on peut prévoir une collerette 24 pour chaque conduit 18 au niveau du corps 16, chacune d'elles coopérant avec la collerette 30 du raccord 26 ou 28 correspondant. En complément, on peut prévoir un seul collier de bridage 34 qui entoure l'ensemble des collerettes, ou deux colliers, un au droit de chaque conduit 18.

Selon une autre variante, les collerettes 24 et 30 peuvent avoir un profil continu ou discontinu en forme de créneaux.

Enfin, de manière générale, le collier de bridage 34, les raccords 26, 28 et le corps 16 ont des formes conjuguées, permettant audit collier disposé au droit de la jonction d'assurer le maintien en contact desdits raccords avec ledit corps. Toutefois, les formes décrites ci-dessus améliorent la résistance mécanique des liaisons.

## Revendications

1. Dispositif de raccordement susceptible d'être intégré dans un poste de comptage d'eau **caractérisé en ce qu'**il comprend :
- un compteur (12) de type horizontal avec des moyens de raccordement (14) disposés de chaque côté du compteur, de préférence au droit l'un de l'autre,
- un corps (16) comportant deux conduits (18), chacun ayant à une première extrémité des moyens (20) de liaison aux conduits (22) du réseau,
- deux raccords (26, 28) dont une première extrémité est susceptible de venir au droit de la seconde extrémité du conduit (18) correspondant du corps et dont une seconde extrémité comporte des moyens (32) de liaison au raccordement (14) correspondant du compteur (12), et
- au moins un collier de bridage (34) disposé au niveau de la jonction du corps (16) et des raccords (26, 28), ledit collier de bridage (34) d'une part, et lesdits raccords (26, 28) et ledit corps (16) d'autre part, ayant des formes conjuguées permettant audit collier (34) de maintenir en contact lesdits raccords et ledit corps.

2. Dispositif selon la revendication 1, **caractérisé en ce que** le corps (16) comprend une surface (40) sensiblement plane, au niveau de laquelle débouchent les secondes extrémités des deux conduits (18), chacune sous forme d'un alésage (42) d'axe sensiblement perpendiculaire à ladite surface (40), et à la périphérie de laquelle est ménagée une collerette (24), et **en ce que** les raccords (26, 28) comprennent chacun au niveau de leur première extrémité une portée cylindrique (44) de diamètre légèrement inférieur à l'alésage (42) du conduit (18) du corps, délimitée par une collerette (30) susceptible de prendre appui contre la surface (40) du corps, le collier de bridage (34), entourant les deux conduits (18), comprenant des rebords (48) susceptibles d'être disposés de part et d'autre desdites collerettes (24, 30) de manière à assurer une liaison solide entre les raccords et le corps.

3. Dispositif selon la revendication 1 ou 2, **caractérisé en ce que** le collier de bridage (34) est en matériau approprié pour être utilisé comme moyen de plombage.

4. Dispositif selon l'une quelconque des revendications 1 à 3, **caractérisé en ce que** chaque raccord (26, 28) comporte au niveau de sa seconde extrémité une tête de raccordement (50) susceptible d'être raccordée directement ou non au raccordement (14) correspondant du compteur (12), comprenant un alésage (52) en forme de tonneau, dont l'axe longitudinal est sensiblement parallèle à l'axe du raccordement (14) du compteur, au niveau de la paroi périphérique duquel débouche un conduit (54) susceptible de déboucher dans l'un des conduits (18) du corps (16).

5. Dispositif selon la revendication 4, **caractérisé en ce que** le conduit (54) du raccord (26, 28) a une section évolutive, sensiblement circulaire au niveau de la première extrémité dudit raccord et de forme aplatie au niveau de la jonction avec la tête (50).

6. Dispositif selon l'une quelconque des revendications 1 à 5, **caractérisé en ce que** des moyens (58) de liaison de type rotule sont prévus entre les raccordements (14) du compteur (12) et les raccords (26, 28).

7. Dispositif selon la revendication 6, **caractérisé en ce que** les moyens de liaison de type rotule sont constitués d'un élément (60) susceptible d'être relié de manière rigide au raccordement (14) correspondant, présentant une portée (58) de préférence conique susceptible d'être introduite dans un alésage (61) ménagé dans la tête de raccordement (50), coaxial à l'alésage (52) en tonneau.

8. Dispositif selon la revendication 6 ou 7, **caractérisé en ce qu'**un pion de positionnement (64) est prévu pour relier les premières extrémités des raccords (26, 28) de manière à positionner correctement les portées cylindriques (44) l'une par rapport à l'autre afin de rendre plus aisée leur introduction simultanée dans les alésages (42).

9. Dispositif selon l'une quelconque des revendications 1 à 8, **caractérisé en ce que** le conduit (18.1) d'arrivée d'eau du corps (16) comprend un ensemble vanne-clapet (76) comportant une bille (78) en matériau magnétique et susceptible d'être immobilisé dans une chambre (74) accessible par l'ouverture supérieure dudit conduit (18.1).

10. poste de comptage d'eau comprenant un dispositif de raccordement selon l'une quelconque des revendications 1 à 9, intégré dans un bloc de matière isolante de type polystyrène expansé, le tout étant disposé dans une borne formée d'une coque en matière plastique.
